# EUROPÄISCHE PATENTANMELDUNG

(11) **EP 2 236 542 A1**
(43) Veröffentlichungstag der Anmeldung: **06.10.2010**
(21) Anmeldenummer: 09004111.2
(22) Anmeldetag: 23.03.2009
(51) Int. Cl.: C08G 73/08

(54) **Herstellung von Polyazol-Kompositen**

(71) Anmelder: GKSS-Forschungszentrum Geesthacht GmbH, 21502 Geesthacht (DE); Technische Universität Hamburg-Harburg, 21073 Hamburg (DE); TuTech Innovation GmbH, 21079 Hamburg (DE)
(72) Erfinder: Loos, Marcio Rodrigo, 21502 Geesthacht (DE); Abetz, Volker, 21335 Lüneburg (DE); Schulte, Karl, 21244 Buchholz i.d. Nordheide (DE)
(74) Vertreter: Grebner, Christian Georg Rudolf

(57) **Zusammenfassung**

Die Erfindung betrifft ein Verfahren zum Herstellen von Polyazol-Kompositen aus Polyazol-Homopolymeren und/oder Polyazol-Copolymeren mittels einer Polykondensationsreaktion von A-A (Hydrazin und/oder dessen Derivate) Monomeren und B-B (Dicarbonsäure und/oder deren Derivate) Monomeren mit wenigstens einem Füllstoff. Die Polyazol-Kompositen werden dabei gemäß den Schritten hergestellt:
a) der wenigstens eine Füllstoff wird in einem Kondensationsmittel, vorzugsweise Polyphosphorsäure, durch Erwärmen der Mischung, vorzugsweise unter einer, insbesondere inerten, Gasatmosphäre, funktionalisiert,
b) Hydrazin und/oder dessen Derivate und wenigstens eine Dicarbonsäure und/oder deren Derivate werden mit der Mischung aus Verfahrensschritt a) zu einer Lösung gemischt,
c) die Lösung aus Verfahrensschritt b) wird, vorzugsweise unter einer inerten Atmosphäre, erhitzt und
d) die Lösung aus Verfahrensschritt c) wird in einer Ausfäll-Lösung zu Polyazol-Kompositen ausgefällt und insbesondere neutralisiert.

Ferner betrifft die Erfindung Polyazol-Komposite sowie die Verwendung von Polyazol-Kompositen.

## Beschreibung

Die Erfindung betrifft ein Verfahren zum Herstellen von Polyazol-Kompositen aus Polyazol-Homopolymeren und/oder Polyazol-Copolymeren mittels einer Polykondensationsreaktion. Ferner betrifft die Erfindung Polyazol-Komposite sowie die Verwendung von Polyazol-Kompositen.

Nanostrukturierte Materialien auf Kohlenstoffbasis, beispielsweise einwandige Kohlenstoff-Nanoröhrchen (single-walled carbon nano tubes (SWCNT)), mehrwandige Kohlenstoff-Nanoröhrchen (multiwalled carbon nano tubes (MWCNT)), Kohlenstoff-Nanofasern (CNF) und Ruß bzw. Kohlenschwarz (carbon black (CB)), sind aufgrund ihrer Eigenschaften für eine große Vielfalt möglicher Anwendungsbereiche wie Nanokomposite, elektronische Vorrichtungen, Feldemissionsbildschirme und für die Speicherung von Wasserstoff sowie für weitere Bereiche der Werkstoffwissenschaft von Interesse. Als Verstärkungszusätze für Nanokomposite können sie Matrizen wie Polymere, Keramik und sogar niedrigschmelzende Metalle stärken.

In den letzten Jahren haben sich die meisten Forschungsarbeiten auf die Verbesserung der Entbehrlichkeit von Kohlenstoff-Nanoröhrchen (CNT), Kohlenstoff-Nanofasern (CNF), Fullerenen und Kohlenschwarz (carbon black (CB)) konzentriert. Verglichen mit diesen Kohlenstoffmaterialien ist das Rußnanopartikel ein verhältnismäßig leitfähiges Kohlenstoffmaterial, das aus 90 bis 99 % elementarem Kohlenstoff besteht und am leichtesten verfügbar ist und aufgrund seines niedrigen Preises in der Industrie vielfältig eingesetzt wird.

Materialien auf Kohlenstoffbasis liegen aufgrund von starken Wechselwirkungen für gewöhnlich als Agglomerate vor, was Schwierigkeiten bei ihrer homogenen Verteilung in einem Mehrstoffsystem mit sich bringt. Folglich konnten ihre herausragenden Eigenschaften, die sich auf der Nanoebene ergeben, nicht wirksam auf Matrixmaterialien übertragen werden. Es wurden daher große Anstrengungen unternommen, über physikalische Verfahren mit Hilfe einer Ultraschallbehandlung, mit chemischen Verfahren unter Verwendung starker Säuren wie Schwefelsäure und Salpetersäure, oder kombinierten Verfahren unter Einsatz der Ultraschallbehandlung in einer starken Säure eine homogene Verteilung von Kohlenstoff-Füllstoffen in verschiedenen Matrixmaterialien zu erreichen. In vielen Fällen ergeben sich jedoch häufig strukturelle Schäden an den Füllstoffen in Anbetracht der aggressiven Reaktionsbedingungen wie Energie, Behandlungsdauer und Temperatur.

Die gewünschten Materialeigenschaften eines Nanokomposits hängen insbesondere von der Stärke der konkreten Wechselwirkungen zwischen Füllstoffen und Matrixpolymeren ab. Die mechanischen Eigenschaften von CNT-Nanokompositen durch physikalisches Vermischen würden stark von der Homogenität der CNT und von starken Wechselwirkungen an den Grenzflächen abhängen. Dasselbe gilt auch für Füllstoffe auf Kohlenstoffbasis.

Allgemein gibt es drei Verfahren zum Herstellen von Polymernanokompositen: (i) Vermischen im geschmolzenen Zustand, (ii) Vermischen von Lösungen und (iii) (In-situ-)Polymerisation. Vom gewerblichen Standpunkt aus scheint das In-situ-Verfahren zur Erzeugung von Nanokompositen vielversprechend zu sein.

Loos und Gomes (M. Loos, D. Gomes, Proceedings of the Eurofillers, Hungary (Zalakaros) 2007, 119) haben ein Polyoxadiazol-Nanokomposit mit einer Verteilung durch die Verwendung von funktionalisierten Kohlenstoff-Nanoröhrchen (CNT) beschrieben. Die Nanokomposite wurden in zwei Schritten hergestellt: Zuerst wurden die CNT in Polyphosphorsäure (PPA) oxidiert. Es wurden verschiedene Oxidationsbedingungen zur Funktionalisierung von CNT in PPA untersucht. Anschließend wurden die funktionalisierten CNT zu einer Polyazol-Matrix gegeben, die in einem anderen Ansatz synthetisiert wurde.

Ferner haben Gomes et al. (D. Gomes, M. R. Loos, M. H. G. Wichmann, A. de la Vega, K. Schulte, Composites Science and Technology 2009, 220-227) ein Polyoxadiazol-Nanokomposit beschrieben, das über die In-situ-Polymerisation hergestellt wurde. Hydrazinsulfat, Kohlenstoff-Nanoröhrchen und zweifach saures Dicarbonsäure-4,4'-diphenylether (DPE) wurden bei 160°C in Polyphosphorsäure (PPA) in Stickstoffatmosphäre 4 h lang zur Reaktion gebracht. Sowohl die Füllstoffe als auch die Monomere wurden in einem Schritt in das Reaktionsmedium gegeben.

Außerdem ist in der deutschen Patentanmeldung mit dem amtlichen Aktenzeichen 10 2008 027 499.2 ein Verfahren zum Herstellen eines Polyoxadiazol-Nanokomposits durch eine In-situ-Polymerisation beschrieben. Das Verfahren beinhaltet die Oxidation von Füllstoffen in Polyphosphorsäure (PPA) vor dem Beginn der Synthese. Dabei werden die während der Synthese verwendeten Monomere in einem Schritt zur Polyphosphorsäure gegeben.

Baek et al. (J.-B. Baek, C. B. Lyons, L.-S. Tan, Macromolecules 2004, 8278) haben die Funktionalisierung von "vapor-grown" Kohlenstoff-Nanofasern (VGCNF) mit einer In-situ-Metapolyetherketon(PEK)-Polymerisation eines AB-Monomers über eine direkte Friedel-Crafts-Arylcarbonylierung in Polyphosphorsäure (PPA) bei 130°C über 51 h beschrieben. Es wurde ein gleichmäßiges Aufpfropfen des linearen Polymers auf die VGCNF erreicht. Dabei wurde festgestellt, dass diese Werkstoffe in starken Säuren besser löslich sind als in üblichen organischen Lösungsmitteln.

Weiterhin haben Oh et al. (S.-J. Oh, H.-J. Lee, D.-K. Keum, S.-W. Lee, D. H. Wang, S.-Y. Park, L.-S. Tan, J.-B. Baek, Polymer 2006, 1132) das Aufpfropfen von Polyetherketon auf mehrwandige Kohlenstoff-Nanoröhrchen über eine In-situ-Polykondensation der AB-Monomere, 3- und 4- Phenoxybenzoesäure in zähflüssiger Polyphosphorsäure (PPA) bei 130°C über 48 h beschrieben. Die entstehenden Nanokomposite wurden hierbei in einem Formpressverfahren hergestellt.

Wang et al. (D. H. Wang, P. Mirau, B. Li, C. Y. Li, J.-B. Baek, .L.-S. Tan, Chem. Mater. 2008, 20, 1502) haben außerdem gezeigt, dass hochverzweigte PEK-VGCNF, die bei 130°C über 51 h in Polyphosphorsäure (PPA) synthetisiert werden, eine bessere Löslichkeit (z.B. in aprotischen polaren Lösungsmitteln) aufweisen als ihre linearen Analoga, die von Baek et al. (2004) beschrieben wurden. Bei den hochverzweigten Polymeren wurde eine stark verminderte Viskosität erreicht.

Ferner haben Eo et al. (S.-M. Eo, S.-J. Oh, L.-S. Tan, J.-B. Baek, European Polymer Journal 2008, 1603) Poly(2,5-benzoxazol) (AB-PBO)/CNT-Verbundwerkstoffe über eine In-situ-Polykondensation des "protonierten" AB-Monomers, 3-Amino-4-hydroxybenzoesäurehydrochlorid, in einem schwach sauren Polyphosphorsäure-Medium hergestellt. Die Reaktion wurde in einem Temperaturbereich von Zimmertemperatur bis 175°C stufenweise über insgesamt 200 h durchgeführt.

Ausgehend von diesem Stand der Technik besteht die Aufgabe der vorliegenden Erfindung darin, Polyazol-Komposite bereitzustellen, die auf einfache Weise herzustellen sind, wobei die Polyazol-Komposite gute mechanische Eigenschaften aufweisen sollen, wobei es möglich sein soll, die Polyazol-Komposite für zahlreiche Anwendungen zu verwenden.

Gelöst wird diese Aufgabe durch ein Verfahren zum Herstellen von Polyazol-Kompositen aus Polyazol-Homopolymeren und/oder Polyazol-Copolymeren mittels einer Polykondensationsreaktion von A-A (Hydrazin und/oder dessen Derivate) Monomeren und B-B (Dicarbonsäure und/oder deren Derivate) Monomeren mit wenigstens einem Füllstoff mit den folgenden Schritten:
a) der wenigstens eine Füllstoff wird in einem Kondensationsmittel, vorzugsweise Polyphosphorsäure, durch Erwärmen der Mischung, vorzugsweise unter einer, insbesondere inerten, Gasatmosphäre, funktionalisiert,
b) Hydrazin und/oder dessen Derivate und wenigstens eine Dicarbonsäure und/oder deren Derivate werden mit der Mischung aus Verfahrensschritt a) zu einer Lösung gemischt,
c) die Lösung aus Verfahrensschritt b) wird, vorzugsweise unter einer inerten Atmosphäre, erhitzt und
d) die Lösung aus Verfahrensschritt c) wird in einer Ausfäll-Lösung zu Polyazol-Kompositen ausgefällt und insbesondere neutralisiert.

Durch die erfindungsgemäßen Polyazol-Kompositen werden Polyazol-Polymere in einer, In-situ-Polykondensationsreaktion hergestellt, wobei die Polyazol-Polymere aufgrund der eingebrachten Füllstoffe bzw. Nanomaterialien verbesserte Eigenschaften aufweisen. Hierbei werden die als Nanomaterialien bereitgestellten Füllstoffe durch das Kondensationsmittel, insbesondere durch den sauren Charakter des Kondensationsmittels, funktionalisiert bzw. oxidiert, wodurch auf der Füllstoffoberfläche Polyazole bzw. Polyazol-Ketten angebunden werden. Dadurch wird die Bindung der Grenzfläche zwischen dem Füllstoff und der Matrixphase des Polyazol-Polymers verbessert. Insbesondere sind die Füllstoffe gleichmäßig in den Polyazol-Polymeren bzw. Polymermatrizes verteilt, wodurch die Polyazol-Komposite verbesserte mechanische, elektrische und/oder thermische Eigenschaften aufweisen.

Vorteilhafterweise wird durch den als Nanomaterial vorliegenden Füllstoff die Polyazol-Polymermatrix verstärkt, so dass eine Verstärkung von Polyazolen mit Nanomaterialien wie Werkstoffen auf Kohlenstoffbasis sowie anderen Nanomaterialien erreicht wird, wobei bevorzugterweise eine gleichmäßige Verteilung der Nanomaterialien in der Polymermatrix ausgebildet wird und wodurch ein Nanokompositmaterial mit einer Verbesserung verschiedener mechanischer, elektrischer und thermischer Eigenschaften hergestellt wird.

Mittels der hergestellten Polyazol-Kompositen ist es möglich, Verbundwerkstoffe oder dergleichen herzustellen, wobei die Polyazol-Komposite bevorzugterweise gleichmäßig verteilte und funktionalisierte Füllstoffe aufweisen. Durch die Eigenschaften und Bedingungen, insbesondere des sauren Charakters des Kondensationsmittels, wird die Oxidation der Oberfläche der Füllstoffe gefördert.

Die aus den Polyazol-Kompositen bzw. Polyazol-Polymeren mit funktionalisierten Füllstoffen hergestellten Polyazol-Verbundwerkstoffe sind in organischen Lösungsmitteln und/oder in starken Säuren, beispielsweise Schwefel-, Salz- und Phosphorsäure, löslich.

Außerdem liegen die erfindungsgemäßen Polyazol-Kompositen bzw. die daraus hergestellten Polyazol-Verbundwerkstoffe in Form von Homopolymeren und/oder Blockcopolymeren und/oder statistischen Copolymeren und/oder Copolymeren mit periodischen Sequenzen und/oder alternierenden Copolymeren vor.

Insbesondere wird der Füllstoff während der Synthese chemisch mit dem Polyazol funktionalisiert, wobei in einer Ausgestaltung des Verfahrens der Füllstoff während der Synthese homogen oder inhomogen in der Polyazolmatrix verteilt ist.

Insbesondere erfolgt in einem ersten Schritt, dass eine Mischung aus dem Kondensationsmittel, insbesondere Polyphosphorsäure, und dem wenigstens einen Füllstoff als Nanomaterial erwärmt wird, wobei der Füllstoff in der Mischung durch entsprechende Mittel, z.B. einer Ultraschallbehandlung, gleichmäßig verteilt wird und gleichzeitig die Mischung gerührt wird. Dies erfolgt vorteilhafterweise unter einer inerten Gasatmosphäre, insbesondere einer Atmosphäre aus Stickstoff und/oder Argon mit oder ohne Wasseranteile. Vorzugsweise wird das Erwärmen in diesem ersten Schritt bei einer Temperatur von 25°C bis 300°C, insbesondere zwischen 50°C und 200°C, und weiter vorzugsweise bevorzugt zwischen 60°C und 120°C durchgeführt.

Anschließend wird nach der Ultraschallbehandlung bzw. der homogenen Verteilung der Füllstoffe in der Mischung die Mischung auf eine Temperatur von 70°C bis 300°C, insbesondere zwischen 80°C und 200°C, und weiter vorzugsweise zwischen 90°C und 170°C unter Rühren der Mischung und unter einer inerten Atmosphäre auf einer erhöhten Temperatur gehalten.

Danach wird ein Monomer, insbesondere ein hydrazinhaltiges Monomer, zu der Mischung gegeben, wobei die Mischung auf einer erhöhten Temperatur und in einer inerten Atmosphäre gehalten wird, wodurch eine Lösung und/oder eine Dispersion entstehen. Danach wird die Lösung bzw. Dispersion auf der erhöhten Temperatur gehalten, wobei die Lösung bzw. Dispersion weiter unter einer inerten Atmosphäre gerührt wird. Im Anschluss daran wird ein weiteres Monomer oder eine Mischung aus Monomeren, insbesondere Dicarbonsäure-haltigen Monomeren, zu der erwärmt gehaltenen Lösung bzw. Dispersion gegeben. Hierbei erfolgt die Zugabe unter Umrühren und Erwärmen in einer inerten Atmosphäre. Nach der Zugabe wird die Lösung bzw. Dispersion weiterhin unter Rühren und in einer inerten Atmosphäre, auf eine Temperatur zwischen 70°C bis 300°C, insbesondere zwischen 80°C und 200°C, und weiter vorzugsweise zwischen 90°C und 170°C auf einer erhöhten Temperatur gehalten. Anschließend wird die erwärmte Lösung ausgefällt und in einer entsprechenden Basislösung gegebenenfalls neutralisiert, so dass aus den hergestellten Polyazol-Kompositen in weiteren Verarbeitungsschritten Verbundwerkstoffe oder dergleichen hergestellt werden.

Die Herstellung der Polyazol-Komposite erfolgt mittels eines schnellen In-situ- Syntheseprozesses, wobei die funktionalisierten Füllstoffe durch die Rührvorgänge durch die Beaufschlagung von Ultraschall homogen in den Mischungen bzw. den Lösungen verteilt werden.

Dadurch, dass die funktionalisierten Füllstoffe in den Polyazol-Ketten funktionalisiert werden bzw. sind, ergibt sich eine verbesserte Dispersion der Füllstoffe in der Polyazol-Matrix, da die Füllstoffe mit den Polyazol-Ketten funktionalisiert werden. Außerdem zeichnet sich das Verfahren durch eine kurze Verfahrensdauer aus, da die Funktionalisierung der Füllstoffe und die Synthese der Polyazole in einem Reaktionsprozess bzw. Batchprozess auf einfache Weise erfolgen.

Das maschinelle Rühren der Mischung bzw. der Lösungen erfolgt beispielsweise bei Winkelgeschwindigkeiten zwischen 1 bis 3000 Umdrehungen pro Minute, insbesondere zwischen 50 bis 1.500 Umdrehungen pro Minute, und weiter vorzugsweise zwischen 200 bis 1.000 Umdrehungen pro Minute eines mechanischen Rührers. Dadurch, dass der Mischung aus dem Kondensationsmittel und dem Füllstoff Schallenergie durch eine Ultraschallquelle zugeführt wird, wird der Füllstoff in der Mischung homogen verteilt. Insbesondere erfolgt die Beaufschlagung mit Ultraschall über eine Spitze, wobei in einer Ausgestaltung die Ultraschallbehandlung chargenweise durchgeführt wird.

Außerdem ist es günstig, wenn die Mischung aus dem Kondensationsmittel, vorzugsweise Polyphosphorsäure, und dem wenigstens einen Füllstoff vor oder nach Erwärmen der Mischung mit Ultraschall beaufschlagt und/oder gerührt wird.

Bevorzugterweise erfolgt die Zugabe von Hydrazin und/oder dessen Derivaten vor der Zugabe von Dicarbonsäure und/oder deren Derivaten.

Des Weiteren ist in einer Ausgestaltung des Verfahrens vorgesehen, dass während der und/oder nach der Zugabe von Hydrazin und/oder dessen Derivaten in die Mischung die Mischung, vorzugsweise in einer inerten Atmosphäre, gerührt wird und/oder dass während oder nach der Zugabe von Dicarbonsäure und/oder deren Derivaten in die Mischung die Lösung (Verfahrensschritt b)) gerührt wird.

Vorzugsweise wird die Lösung im Verfahrensschritt c) während und/oder nach dem Erwärmen unter Verwendung, beispielsweise eines mechanischen Rührers, gerührt.

Darüber hinaus zeichnet sich eine Ausgestaltung des Verfahrens dadurch aus, dass die Erwärmung der Mischung im Verfahrensschritt a) bei einer Temperatur von 25°C bis 300°C, insbesondere zwischen 50°C und 200°C, weiter vorzugsweise zwischen 60°C und 120°C, durchgeführt wird und/oder dass die Erhitzung der Lösung im Verfahrensschritt c) bei einer Temperatur von 25°C bis 300°C, insbesondere zwischen 50°C und 200°C, weiter vorzugsweise zwischen 90°C und 170°C, durchgeführt wird.

Außerdem wird die Erwärmung der Mischung im Verfahrensschritt a) für eine Zeitdauer von 1 Minute bis 100 Stunden, insbesondere für eine Zeitdauer von 0,5 Stunden bis 48 Stunden, weiter vorzugsweise für eine Zeitdauer von 0,5 Stunden bis 24 Stunden, ausgeführt. Vorzugsweise wird die Erhitzung der Lösung im Verfahrensschritt c) für eine Zeitdauer von bis zu 48 Stunden, vorzugsweise von 0,5 Stunden bis 48 Stunden, insbesondere von 1 Stunde bis 24 Stunden oder von 1 Stunde bis 16 Stunden, ausgeführt.

Des Weiteren ist gemäß einer bevorzugten Ausgestaltung vorgesehen, dass im Verfahrensschritt b) Hydrazin in Form von Hydrazin-Salz, insbesondere Hydrazin-Sulfatsalz, zugemischt wird und/oder dass im Verfahrensschritt b) Dicarbonsäure in Form von Dicarbonsäure und/oder deren Derivate und/oder eine Mischung davon mit einem Diamin zugemischt werden, wobei insbesondere die Dicarbonsäure und/oder deren Derivate eine Struktur gemäß der Formel 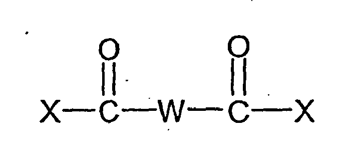 aufweist, wobei W eine Gruppe mit 1 bis 40 Kohlenstoffatomen ist, X eine Gruppe mit der Formel OR² beschreibt, wobei R² ein Wasserstoffatom oder eine Gruppe mit 1 bis 20 Kohlenstoffatomen ist, und weiter insbesondere W einen Substituenten und/oder ein Mehrfachringsystem mit aromatischen Ringen umfasst, wobei insbesondere ein oder mehrere Gruppen von -O-, -CO-, - C(CH₃)₂ -, - C(CF₃)₂ - und - SO₂ - zwischen den aromatischen Ringen vorhanden sind,
und/oder wobei insbesondere das oder die Diamine eine Struktur gemäß der Formel

H₂N-Q-NH₂

aufweist, wobei Q eine Gruppe mit 1 bis 40 Kohlenstoffatomen ist.

Die Gruppe mit 1 bis 40 Kohlenstoffatomen für W kann gesättigt und/oder ungesättigt sowie verzweigt und/oder unverzweigt sein.

Bevorzugterweise besteht der Füllstoff aus, insbesondere modifiziertem oder nicht modifiziertem, Ruß (CB) und/oder Kohlenstoff-Nanofasern (CNF) und/oder Kohlenstoff-Nanoröhrchen (CNT) und/oder Fulleren und/oder amorphem Kohlenstoff und/oder Zeolith und/oder Graphen und/oder Molekularsieb-Kohlenstoff und/oder Graphit und/oder pyrolysierten Polymerpartikeln und/oder Aluminiumoxid und/oder Zinkoxid und/oder Siliziumdioxid und/oder Silikaten und/oder Polymerfasern und/oder Glasfasern und/oder Calciumcarbonatpulvern und/oder Bariumsulfat und/oder Kaolin und/oder Titandioxid und/oder Eisenoxid und/oder organischen Harzen und/oder natürlichen mineralischen Füllstoffen und/oder synthetischen mineralischen Füllstoffen und/oder Tonen und/oder Aluminiumsilikat und/oder Hektorit und/oder Montmorillonit und/oder Bentonit und/oder Beidelit und/oder Saponit und/oder Stevensit und/oder Sauconit und/oder Nontronit und/oder Gold und/oder wasserhaltigen Metallhydroxiden und/oder Smektiten und/oder Vermiculiten und/oder Glimmer und/oder Aluminiumoxid und/oder Aluminiumnitrid und/oder Buckminster-Fullerenen und/oder Kupfer und/oder Kupferoxid und/oder Ion und/oder Eisen-Kobalt-Legierung und/oder Eisen-Nickel-Legierung und/oder Magnesium und/oder Magnesiumoxid und/oder magnetischen Nanopartikeln und/oder magnetischen Nanostrukturen und/oder Magnetit und/oder Nanodots und/oder Nanobelts und/oder Nanokristallen und/oder pulverförmigen Nanoschmiermitteln und/oder Nanostäbchen und/oder Nanoschleifschwämmen und/oder Nickelnioboxid und/oder Quantenpunkte und/oder Silber und/oder Titandioxid und/oder Titan und/oder Wolfram und/oder Vanadiumoxid und/oder Zink und/oder Zirconium und/oder Zirconiumoxid und/oder Zirconiumsilikat und/oder Mischungen davon.

Darüber hinaus beträgt die Konzentration des Füllstoffs in den Polyazol-Kompositen zwischen 0,0001 Gew.-% und 50 Gew.-%, insbesondere zwischen 0,0001 Gew.-% und 30 Gew.-%, weiter vorzugsweise zwischen 0,001 Gew.-% und 15 Gew.-%.

Außerdem enthält die Mischung, insbesondere im Verfahrensschritt a), zusätzlich Verarbeitungshilfsmittel und/oder Vernetzungsmittel und/oder Weichmacher und/oder Treibmittel und/oder Schmiermittel und/oder grenzflächenaktive Stoffe und/oder Konsistenzverbesserer und/oder Farbstoffe und/oder Pigmente und/oder Glimmer und/oder Flammverzögerungsmaterial und/oder Stabilisatoren und/oder Haftvermittler und/oder Mischungen davon.

Bei dem erfindungsgemäßen Verfahren weist das Polyazol ein Polymer mit wenigstens einem konjugierten Ring mit zwei Stickstoffatomen und einem Sauerstoffatom auf, wobei insbesondere das Polymer eine Wiederholungseinheit der Struktur 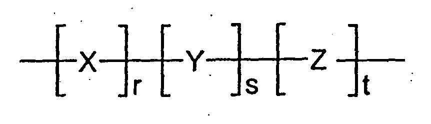 und/oder 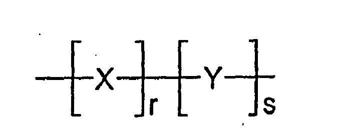 und/oder 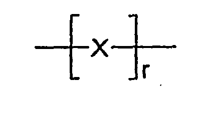 aufweist, wobei r, s und t ganze natürliche Zahlen (größer Null) sind, X und Y und Z jeweils unabhängig eine Gruppe sind, die eine der nachfolgend beschriebenen Strukturen aufweisen: 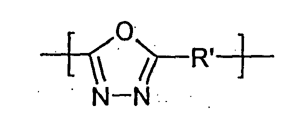 und/oder 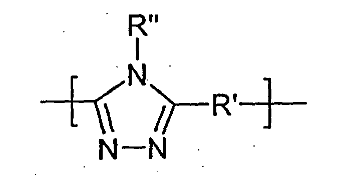 und/oder 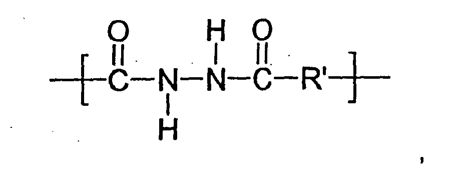 wobei R und R' jeweils Gruppen mit 1 bis 40 Kohlenstoffatomen sind, die vorzugsweise von einer Dicarbonsäure bereitgestellt werden, und R" ein Wasseratom oder eine Gruppe mit 1 bis 40 Kohlenstoffatomen ist, die vorzugsweise von einem primären Amin bereitgestellt werden.

Darüber hinaus ist in einer Ausgestaltung vorgesehen, dass die Polyazol-Kompositen eine relative Molekülmasse zwischen 10² g/mol und 10⁷ g/mol, insbesondere zwischen 10³ g/mol und 10⁶ g/mol, weiter vorzugsweise zwischen 10⁴ g/mol und 10⁵ g/mol, aufweisen.

Überdies werden in einem bevorzugten Verfahrensschritt die Polyazol-Kompositen in einer Lösung gelöst und unter Verwendung eines Kalanders, vorzugsweise mit drei Rollen, und/oder eines Mischers, insbesondere eines Ultraschallmischers, vor dem Gießen zu einem Film oder Bilden einer Faser bearbeitet und/oder die Polyazol-Kompositen vor dem Gießen zu einem Film oder Bilden einer Faser geschmolzen. Anschließend werden die Polyazol-Komposite zu einem Film oder einer Faser weiterverarbeitet.

Überdies wird die Aufgabe durch Polyazol-Komposite gelöst, wobei die Polyazol-Komposite wenigstens einen Füllstoff enthält, der durch Polyazol funktionalisiert ist, wobei insbesondere die Polyazol-Komposite erhältlich ist durch Ausführung der genannten Verfahrensschritte. Zur Vermeidung von Wiederholungen wird auf die obigen Ausführungen ausdrücklich verwiesen.

Weiterhin wird die Aufgabe gelöst durch eine Verwendung von Polyazol-Kompositen, die gemäß dem voranstehend beschriebenen Verfahren hergestellt werden, zur Herstellung einer Membran oder einer Faser oder eines Films oder einer Folie oder einer Beschichtung oder eines Formteils oder in Brandschutzstrukturen oder als Flammverzögerungsmaterial oder als leitfähiger Draht oder als Drahtschutzhülle oder als Antistatikmaterial oder als Konstruktionsbauteil für den Kraftfahrzeugbereich oder für Bauteile für die Luftfahrt oder für Textilien, insbesondere Bekleidungstextilien, oder als Verstärkungsmaterial.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

Die Erfindung wird nachstehend ohne Beschränkung des allgemeinen Erfindungsgedankens anhand von Ausführungsbeispielen unter Bezugnahme auf die Zeichnungen exemplarisch beschrieben, wobei bezüglich aller im Text nicht näher erläuterten erfindungsgemäßen Einzelheiten ausdrücklich auf die Zeichnungen verwiesen wird. Es zeigen:
- Figur 1: schematisch einen Versuchsaufbau, der für die In- situ-Synthese der CB/POD-Verbundwerkstoffe gemäß den Beispielen 1, 2 und 3 verwendet wird;
- Figur 2: schematisch den vorgeschlagenen Oxidationsweg von Kohlenschwarz (CB) und das Aufpfropfen von Polyoxadiazolen (POD) auf die CB-Oberfläche ge- mäß den Beispielen 1, 2 und 3;
- Figur 3a, 3b: die Raman-Spektren von reinem CB (a) und von ei- nem CB/POD-Verbundwerkstoff (b);
- Figur 4: die TGA-Thermogramme von CB, des reinen Poly- mers und der CB/POD- Nanokomposite;
- Figur 5: die Änderung des Speichermoduls (E') der CB/POD- Nanokomposite in Abhängigkeit von der Temperatur;
- Figur 6: die Änderung von tan δ der CB/POD-Nanokomposite in Abhängigkeit von der Temperatur;
- Figur 7: die Spannungs-Dehnungskurven der CB/POD-Nano- komposite;
- Figur 8: die Zugfestigkeit und die Bruchdehnung der CB/POD- Nanokomposite, aufgetragen in Abhängigkeit von der CB-Konzentration;
- Figur 9: TEM-Aufnahmen der Bruchfläche der POD-Nano- komposite, die mit 0,5 Gew.-% CB verstärkt wurden, nach der Durchführung von Zugversuchen und
- Figur 10: REM-Aufnahmen der Bruchfläche der POD- Nanokomposite, die mit 0,5 Gew.-% CB verstärkt wurden, nach der Durchführung von Zugversuchen.

In Figur ist schematisch der Versuchsaufbau gezeichnet, der für die In-situ-Synthesen der gemäß den in den nachfolgenden Beispielen 1, 2 und 3 beschriebenen Verbundwerkstoffe aus Kohlenschwarz (Carbon Black) (CB) und Polyoxadiazolen (POD) verwendet wurde. Hierbei umfasst der Versuchsaufbau eine Rührmaschine I, eine Ultraschallbehandlungscharge II sowie ein Heizsystem III und einen Reaktor IV.

### BEISPIELE

### BEISPIEL 1

In-situ-Polymerisation (Polyoxadiazol, POD, mit 0,1 Gew.-% Rußzusatz)

Die Reaktionen wurden in einem Dreihalskolben (250 ml) durchgeführt, der mit einer Stickstoffzuleitung versehen war, damit die Reaktionsatmosphäre frei von Sauerstoff und Wasser blieb. Zu Beginn wurden Polyphosphorsäure, PPA (316 g), und Ruß (Kohlenschwarz (CB)) (0,02 g) in den Kolben gegeben und bei Ultraschallbehandlung und gleichzeitigem maschinellen Rühren (500 U/min) 1 h lang auf 80°C erwärmt. Dann wurde die Mischung 2 h lang maschinell bei 160°C gerührt. Anschließend wurde Hydrazinsulfat, HS (0,031 mol) zu der Mischung gegeben, das unter maschinellem Rühren bei 100°C 0,5 h lang reagierte. Die Mischung wurde anschließend auf 160°C erwärmt. Dann wurden zu der Mischung 0,013 mol 4-4'-Oxybisbenzoesäure, DPE, gegeben, die unter maschinellem Rühren 4 h lang reagierte.

Die ursprüngliche Farbe aller Reaktionsgemische war aufgrund der Verteilung von CB schwarz. Am Ende der Reaktion war die Farbe der Mischung dunkel glänzend und die fertige Lösung wurde in Form stabiler Fasern in Wasser ausgefällt, das 5 % Gew./Volumen Natriumhydroxid enthielt. Das fertige Reaktionsmedium ist sehr zähflüssig, was die Ausfällung und Neutralisierung des Verbundwerkstoffs sehr erschwert.

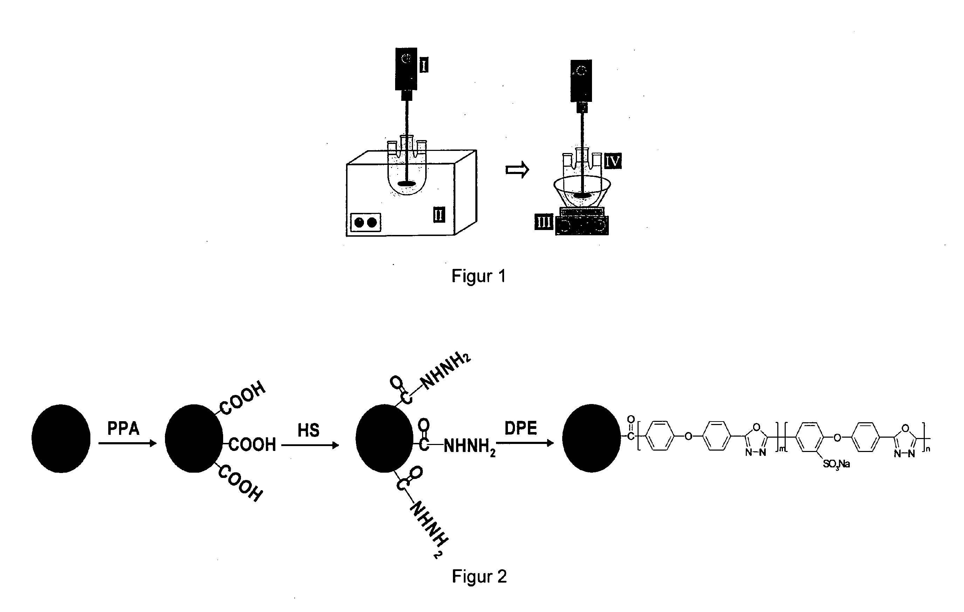

Um Lösungsmittelreste aus dem fertigen Verbundwerkstoff zu entfernen, wurde die Probe unter Verwendung einer Schneidmühle Retsch Grindomix GM 200 in kleine Stücke zerkleinert. Die Suspension, die das zerkleinerte Material enthielt, wurde abschließend in einen Behälter gebracht, in dem die Reinigung stattfindet. Die Reinigung umfasste zuerst die Neutralisierung des pH der Suspension und das Rühren der Polymersuspension bei Zimmertemperatur über mehrere Stunden. Die fertige Polymerprobe wurde dann durch Filtration erhalten. Fig. 1 zeigt den Versuchsaufbau, der bei der Synthese verwendet wurde.

Der Oxidationsweg des CB und das Aufpfropfen von POD auf die CB-Oberfläche ist in Fig. 2 dargestellt.

### BEISPIEL 2

In-situ-Polymerisation (Polyoxadiazol, POD, mit 0,5 Gew.-% Rußzusatz)

Auf ähnliche Weise wie bei Beispiel 1 wurden 0,1 g Ruß CB mit 0,031 mol Hydrazinsulfat und 0,013 mol 4-4'-Oxybisbenzoesäure in 316 g Polyphosphorsäure zur Reaktion gebracht. Die Reaktionsgemische waren homogen mit einem drastischen Anstieg der Viskosität am Ende der Polymerisation. Die Viskosität hatte den Punkt erreicht, dass die Spinnlösung am Rührstab klebte, so dass Polymere mit einer hohen relativen Molekülmasse synthetisiert wurden. Der Verbundwerkstoff konnte nicht in Wasser gegossen werden, um nur durch die Schwerkraft Fasern zu spinnen. Die Viskosität war sogar noch höher, anschließend wurde Wasser in das Reaktionsgefäß gegeben und ein großer Klumpen des Produkts wurde isoliert.

Das fertige Nanokomposit wurde auf ähnliche Weise wie in Beispiel 1 behandelt. Der Ertrag war selbst nach den vollständigen Aufarbeitungsverfahren nahezu quantitativ. Das entstehende Polymer besitzt eine relative Molekülmasse im Bereich von 10⁵ g/mol.

### BEISPIEL 3

In-situ-Polymerisation (Polyoxadiazol, POD, mit 1,0 Gew.-% Rußzusatz)

Auf ähnliche Weise wie bei Beispiel 1 wurden 0,2 g Ruß CB mit 0,031 mol Hydrazinsulfat und 0,013 mol 4-4'-Oxybisbenzoesäure in 316 g Polyphosphorsäure zur Reaktion gebracht. Die Reaktionsgemische waren homogen mit einem drastischen Anstieg der Viskosität am Ende der Polymerisation. Die Viskosität hatte den Punkt erreicht, dass die Spinnlösung am Rührstab klebte, so dass Polymere mit einer hohen relativen Molekülmasse synthetisiert wurden. Der Verbundwerkstoff konnte nicht in Wasser gegossen werden, um nur durch die Schwerkraft Fasern zu spinnen. Die Viskosität war sogar noch höher, anschließend wurde Wasser in das Reaktionsgefäß gegeben und ein großer Klumpen des Produkts wurde isoliert.

Das fertige Nanokomposit wurde auf ähnliche Weise wie in Beispiel 1 behandelt. Der Ertrag war selbst nach den vollständigen Aufarbeitungsverfahren nahezu quantitativ. Das entstehende Polymer besitzt eine relative Molekülmasse im Bereich von 10⁵ g/mol.

### BEISPIEL 4

### Folienherstellung

Aus Lösungen mit einer Verbundwerkstoffkonzentration von 3 Gew.-% in DMSO (Dimethylsulfoxid) wurden homogene Folien gegossen. Nach dem Gießen wurde das DMSO in einem Vakuumofen 24 h lang bei 90°C verdampft. Um Lösungsmittelreste weiter zu entfernen, wurden die Membranen 24 h lang bei 50°C in ein Wasserbad getaucht und in einem Vakuumofen 24 h lang bei 100°C getrocknet. Die Enddicke der Folien betrug etwa 60 µm.

### BEISPIEL 5

Charakterisierung der Nanokompositen mit Raman und Thermogravimetrie

Die Raman-Spektren wurden mit einem Ramanspektrometer Lab-Ram HR 800 von Jobin Yvon unter Verwendung der Laserlinie bei 633 nm aufgenommen. Mit einer Mikro-Waage (Netzsch 209 TG), die mit einer Thermoanalysesteuerung (TASC 414/3) ausgestattet war, wurden Versuche zur thermogravimetrischen Analyse (TGA) durchgeführt. Die Sammelprobe wurde unter Argon und in Luftatmosphäre bei 10°C/mm von 90°C auf 900°C erwärmt.

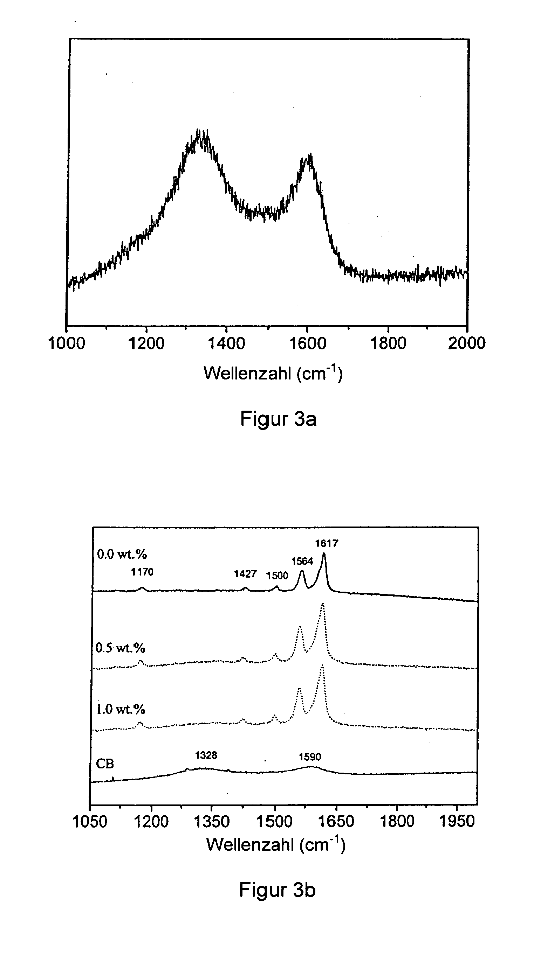

In Figur 3a und 3b sind die Raman-Spektren von Kohlenschwarz (CB) (vgl. Fig. 3a) und von Polyoxadiazol-Nanokompositen, die Kohlenschwarz (CB) mit einem Anteil von 0,5 Gew. % bis 1,0 Gew.-% enthalten, (vgl. Fig. 3b) dargestellt.

Das Raman-Spektrum von CB (Fig. 3a) ähnelt den in der Literatur bekannten Spektren. Das Band bei 1606 cm⁻¹, oft G-Modus genannt, wird der Verschiebung der Kohlenstoffatome in der Ebene zugeordnet, die in den sechseckigen Schichten stark gekoppelt sind. Das Band bei 1328 cm⁻¹ (D-Modus genannt) erscheint, wenn die Graphitstruktur gestört wird, wie es beim Ruß der Fall ist.

Wie in Figur 3b dargestellt ist, weisen alle Verbundwerkstoffe ähnliche Banden auf, die im reinen sulfonierten Polyoxadiazol bei 1617 cm⁻¹, 1564 cm⁻¹ und 1427 cm⁻¹ liegen und den aromatischen Gruppen zuzuordnen sind, und bei 1170 cm⁻¹, die sich auf sulfonierte Gruppen der Hauptkette des Polyoxadiazols beziehen. Es werden auch Banden bei 1500 cm⁻¹ durch den Oxadiazolring beobachtet. Bei allen Verbundwerkstoffen überdecken die Signale des Polymers vollständig die Signale vom Ruß, da der Ruß vollständig von den Polymerketten umhüllt sein sollte bzw. ist.

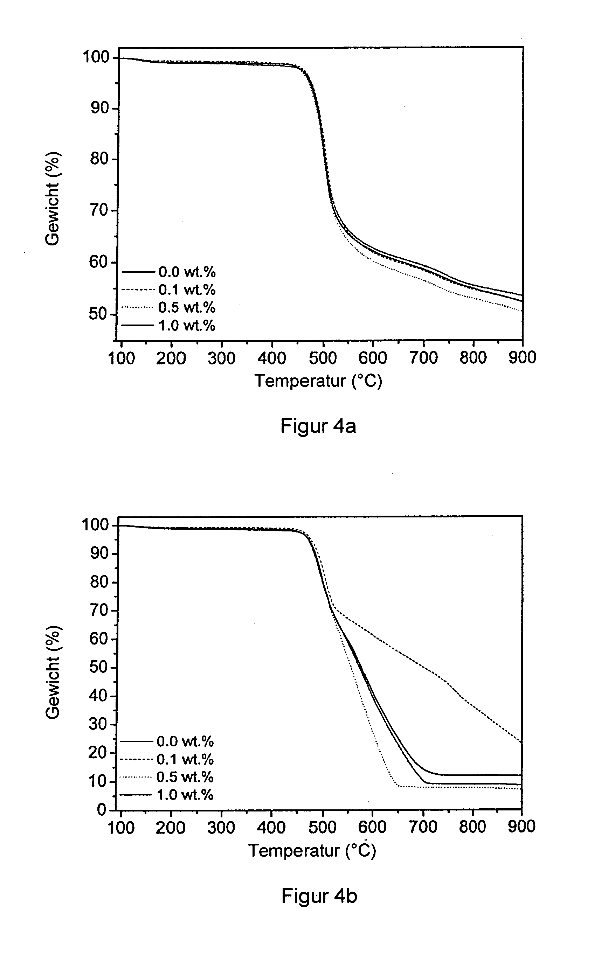

Die Proben wurden einer thermogravimetrischen Analyse (TGA) der Sammelproben in Argon beziehungsweise in Luft unterzogen, um ihre thermooxidative Stabilität zu ermitteln. Die Ergebnisse sind in Fig. 4 und Tabelle 1 dargestellt.

**Tabelle 1**

| CB (Gew. % bzw. wt %) | T_{d5}^{a} (°C) | | T_{d10}^{b} (°C) | | Rest bei 500°C (%) | |
|---|---|---|---|---|---|---|
| | in Argon | in Luft | in Argon | in Luft | in Argon | in Luft |
| 0.0 | 466 | 469 | 482 | 483 | 79 | 80 |
| 0.1 | 474 | 473 | 488 | 487 | 83 | 82 |
| 0.5 | 468 | 467 | 483 | 479 | 79 | 78 |
| 1.0 | 470 | 468 | 485 | 479 | 81 | 78 |

| | | | | | | |
|---|---|---|---|---|---|---|
| ^{a} 5 % thermischer Gewichtsverlust gemessen mittels TGA; ^{b} 10 % thermischer Gewichtsverlust gemessen mittels TGA. | | | | | | |

Die Wärmestabilität von Nanokompositen in Argon war geringfügig, jedoch nicht wesentlich gegenüber in Luft erhöht. Das reine Polyoxadiazol (POD) und die Nanokomposite auf CB-Basis zeigen (unter Argon, Fig. 4a) einen Verlust von 5 Gew.-% (T_{d5}) im Bereich von 466°C bis 470°C, einen Verlust von 10 Gew.-% (T_{d10}) im Bereich von 482°C bis 485°C und einen Rest von ungefähr 80 % bei 500°C.

Unter Luftatmosphäre (Fig. 4b) nimmt die Wärmestabilität der Verbundwerkstoffe, die mit 0,1 Gew.-% CB verstärkt sind, leicht zu. Die CB/POD-Verbundwerkstoffe können daher bei Temperaturen von bis zu 450°C verwendet werden.

### BEISPIEL 6

Charakterisierung der dynamisch-mechanischen und der Zugeigenschaften der Nanokomposite

Zur Ermittlung des Speichermoduls (E'), des Verlustmoduls (E") und des Verlustfaktors (tan δ = E" / E') wurde die dynamisch-mechanische Thermoanalyse (DMTA) eingesetzt.

Die dynamisch-mechanische Thermoanalyse (DMTA) wurde unter Verwendung des TA-Instruments mit der Bezeichnung RSA II (Rheometrics Solid Analyzer II) mit einem Filmzugmodus bei einer Frequenz von 1 Hz und einer statischen Ausgangskraft von 0,1 N durchgeführt.

Die Temperatur wurde von 25° C bis 500°C bei einer Heizrate von 2°C/min und einer gleich bleibenden Dehnung von 0,05 % verändert. Die Werte für T₉ und das Speichermodul E' bei 100°C und 300°C sind in Tabelle 2 aufgeführt.

**Tabelle 2**

| CB (Gew. % bzw. wt %) | T_{g} (°C)^{a} | | Speichermodul E' (GPa) | |
|---|---|---|---|---|
| | Verlustmodul Verlustmodul E" | Verlust-faktor tan δ | bei 100°C | bei 300°C |
| 0.0 | 430 | 447 | 3.18 | 2.48 |
| 0.1 | 390 | 420 | 3.88 | 2.58 |
| 0.5 | 390 | 414 | 3.75 | 2.70 |
| 1.0 | 400 | 425 | 2.04 | 2.16 |

| | | | | |
|---|---|---|---|---|
| ^{a} Glasübergangstemperatur gemessen mittels DMTA | | | | |

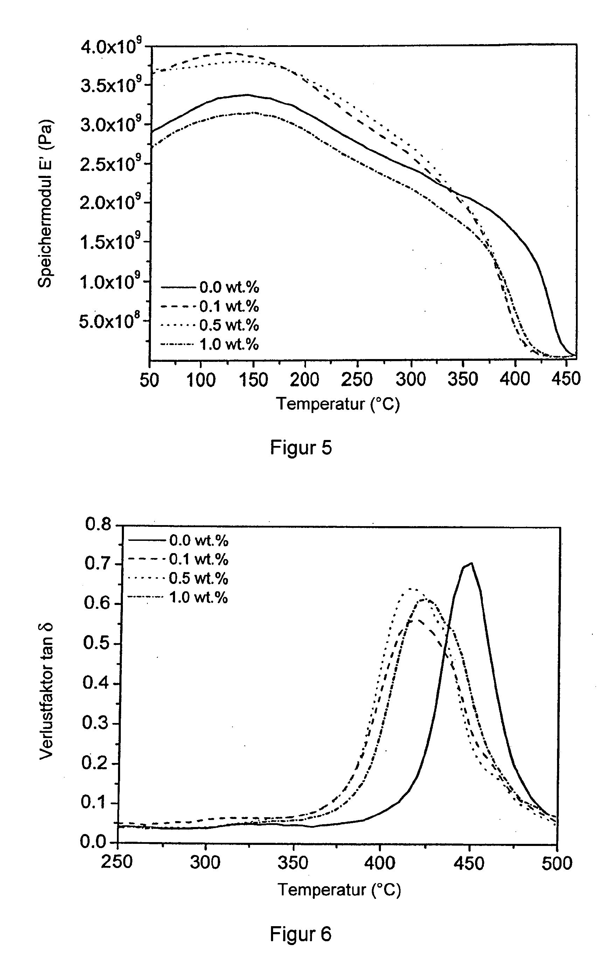

Die Veränderung des Speichermoduls E' und des Verlustfaktors tan δ bei unterschiedlichem CB-Gehalt ist in den Figuren 5 bis 6 in Abhängigkeit von der Temperatur aufgetragen. Die Werte für E', die mit dem Elastizitätsmodul der Werkstoffe in Wechselbeziehung stehen, betragen für das reine POD und die POD/CB-Verbundwerkstoffe, die 0,1, 0,5 und 1,0 Gew.-% (bzw. wt %) CB enthalten, bei 100°C 3,18, 3,88, 3,75 beziehungsweise 3,04 GPa. Die Erhöhung von E' spiegelt die Wechselwirkung zwischen CB und POD wider, wodurch die Kettenpackung und die homogene Verteilung verbessert werden.

Es wurden Zugversuche gemäß ASTM D882-00 unter Verwendung einer Zwick-Roell-Maschine mit einem 500-N-Kraftaufnehmer durchgeführt, die mit einer Traversengeschwindigkeit von 25 mm/min arbeitet.

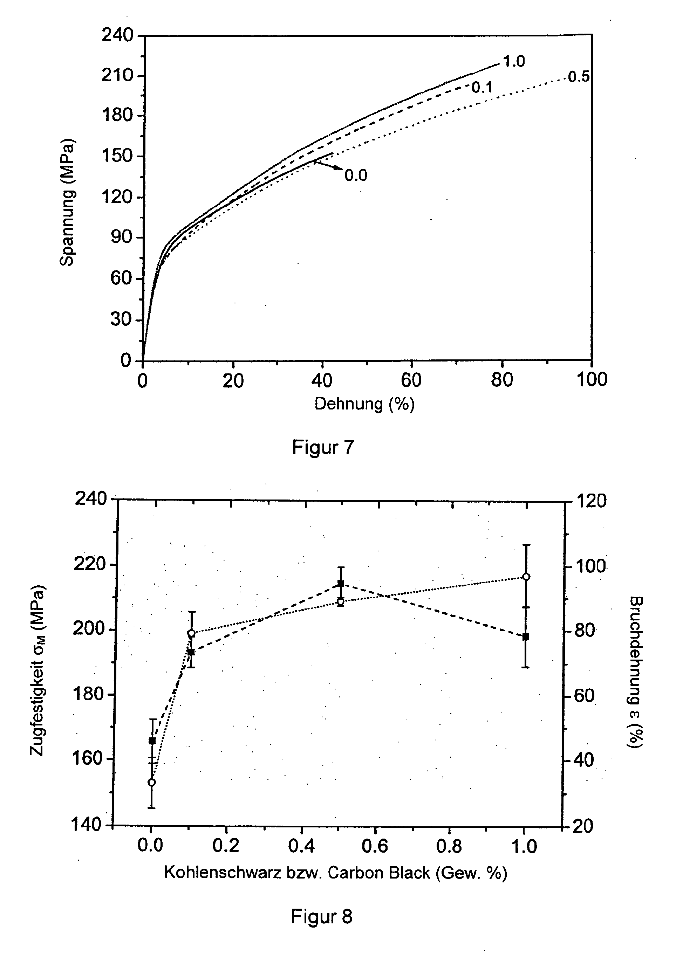

In Tabelle 3 sind die Zugeigenschaften aufgeführt und Figur 7 zeigt die Spannungsdehnungskurven des reinen POD und der Verbundwerkstoffe, die 0,1, 0,5 und 1,0 Gew.-% (bzw. wt. % (weight %)) CB enthalten.

**Tabelle 3**

| CB (Gew. %) | Elastizitätsmodul E (MPa) | Zugfestigkeit σ_{M} (MPa) | Reißdehnung ε (%) |
|---|---|---|---|
| 0.0 | 2690 ± 42 | 153 ± 8 | 45.7 ± 6.8 |
| 0.1 | 2540 ± 332 | 199 ± 7 | 73.2 ± 4.7 |
| 0.5 | 2830 ± 41 | 209 ± 1 | 94.7 ± 5.0 |
| 1.0 | 2770 ± 115 | 217 ± 10 | 78.3 ± 9.3 |

| | | | |
|---|---|---|---|
| E: Elastizitätsmodul; σ_{M}: Zugfestigkeit; ε: Reißdehnung. | | | |

Der Elastizitätsmodul E nahm etwas zu (bis zu 7 %), wenn 0,5 Gew.-% CB in das Polyoxadiazol eingebaut werden.

Figur 8 zeigt die Zugfestigkeit und die Bruchdehnung der POD-Nanokomposite, aufgetragen in Abhängigkeit von der CB-Konzentration. Die Zugfestigkeit steigt bis zu 34 %, 37 % und 48 %, wenn die CB-Konzentration 0,1, 0,5 beziehungsweise 1,0 Gew.-% beträgt. Die starke Wechselwirkung zwischen dem funktionalisierten CB und der POD-Matrix verbessert die Verteilung sowie die Grenzflächenadhäsion sehr, wodurch das gesamte mechanische Verhalten der Verbundwerkstoffe verbessert wurde.

Wie in Fig. 7 und 8 dargestellt ist, wird das POD durch die Zugabe von CB duktiler. Durch Verwendung von lediglich 1,0 Gew.-% CB wurde die Bruchdehnung bis zu 118 % gesteigert.

### BEISPIEL 7

### Morphologische Charakterisierung der Nanokompositen

Die Folienmorphologie wurde mit einem Rasterelektronenmikroskop (REM) des Typs LEO 1550VP betrachtet. Die TEM-Aufnahmen wurden unter Verwendung eines Feldemissions-Transmissionselektronenmikroskops (TEM) Tecnai G2 F20 bei einer Beschleunigungsspannung von 200 kV erhalten; die Proben wurden unter Verwendung eines Ultracut-Mikrotoms mit Diamantmesser in Scheiben mit einer Dicke von 80 nm geschnitten.

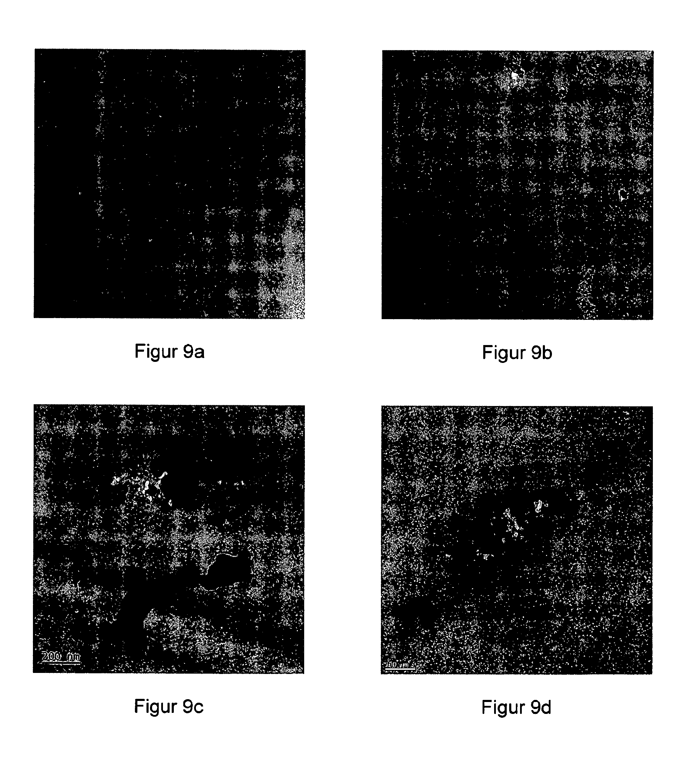

Nach der Durchführung von Zugversuchen mit den POD-Verbundwerkstoffen, die mit 0,5 Gew.-% CB verstärkt waren, wurde die Bruchfläche mit dem TEM und REM betrachtet, um den Verteilungszustand des CB in der Polyoxadiazolmatrix zu untersuchen. Wie in den TEM-Aufnahmen (Figuren 9a bis b) dargestellt ist, liegt das CB wie eine Kern-Hülle-Struktur in Form kleiner Aggregate in der Größenordnung von 50 bis 200 nm vor. Ein solches Aggregat ist von Polyoxadiazolpolymer beschichtet, da die Carboxylgruppen, die auf der Oberfläche der kleinen CB-Aggregate während des Schritts vor der Verteilung erzeugt werden, das Wachstum von Polyoxadiazolketten wirksam verankert haben und die Bindung an der Grenzfläche zwischen dem CB und der umgebenden Matrix verbessern.

Die Bindung an der Grenzfläche ermöglicht eine wirksame Kraftübertragung zwischen Polymer bzw. Polymermatrix und CB. In der vergrößerten Aufnahme, wie sie in Fig. 9c dargestellt ist, ist ersichtlich, dass sich der Bruch (Riss) in der CB-Phase befindet, was auf eine starke Bindung an der Grenzfläche zwischen Kern-Hülle und der Matrixphase schließen lässt.

Figur 9d zeigt eine gestreckte CB-Kern-Hülle-Struktur durch den Widerstand gegen den Bruch, was auf einen synergistischen Effekt des beschichteten CB während des Bruchs deutet.

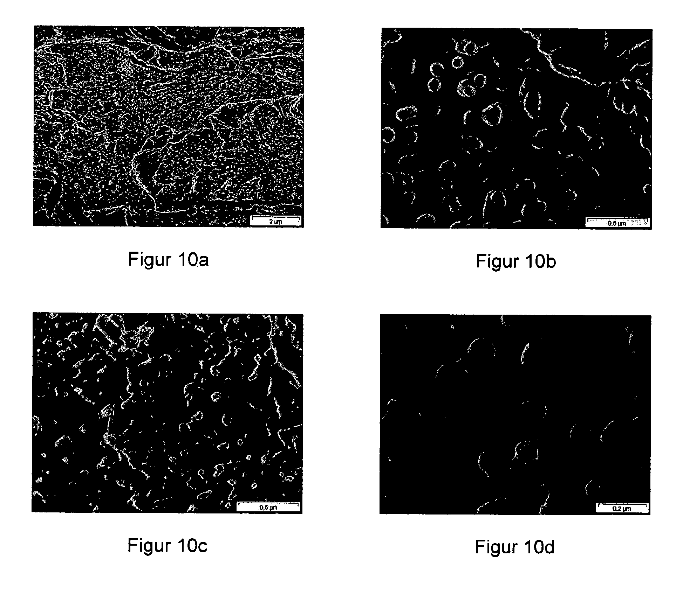

Figur 10 zeigt die repräsentativen REM-Aufnahmen des Querbruchs der Verbundwerkstoffe, die mit 0,5 Gew.-% CB verstärkt sind. Wie ersichtlich ist, lassen die Aufnahmen in Übereinstimmung mit den TEM-Aufnahmen darauf schließen, dass kleine CB-Aggregate in Form einer Kern-Hülle-Struktur, die mit dem Polyoxadiazol beschichtet ist, vorliegen.

Im Ergebnis konnten bei den Versuchen Verbundwerkstoffe auf Polyazol-Basis mit einem 22 % höheren Speichermodul bei 100 °C, einer 48 % höheren Zugfestigkeit und einer 118 % höheren Bruchdehnung bei geringen Füllstoffkonzentrationen erreicht werden. Diese leichten Hochleistungs-/Hochtemperaturwerkstoffe können vorteilhafterweise bei Temperaturen von bis zu 450 °C eingesetzt werden.

Gemäß der Erfindung werden ganz allgemein Werkstoffe bzw. *Ver*bundwerkstoffe auf Polyazol-Basis mit darin verteilten Füllstoffen, insbesondere Nanokomposite auf Polyazol-Basis sowie ein schnelles und einfaches In-situ-Verfahren zu ihrer Herstellung bereitgestellt, wobei die Nanokomposite als leitfähige, thermisch, mechanisch und chemisch stabile Membranen, Fasern und Folien verwendbar sind, die sich für Trennvorgänge und als Verstärkungsmaterialien, Sensoren, Elektroden, Beschichtung, Bauteile für den Kraftfahrzeugbereich, Bauteile für die Luftfahrt, Antistatikmaterialien, Brandschutzmaterialien, Formteil, Bekleidungsmaterialien und leichte Werkstoffe eignen.

## Patentansprüche

1. Verfahren zum Herstellen von Polyazol-Kompositen aus Polyazol-Homopolymeren und/oder Polyazol-Copolymeren mittels einer Polykondensationsreaktion von A-A (Hydrazin und/oder dessen Derivate) Monomeren und B-B (Dicarbonsäure und/oder deren Derivate) Monomeren mit wenigstens einem Füllstoff mit den folgenden Schritten:
a) der wenigstens eine Füllstoff wird in einem Kondensationsmittel, vorzugsweise Polyphosphorsäure, durch Erwärmen der Mischung, vorzugsweise unter einer, insbesondere inerten, Gasatmosphäre, funktionalisiert,
b) Hydrazin und/oder dessen Derivate und wenigstens eine Dicarbonsäure und/oder deren Derivate werden mit der Mischung aus Verfahrensschritt a) zu einer Lösung gemischt,
c) die Lösung aus Verfahrensschritt b) wird, vorzugsweise unter einer inerten Atmosphäre, erhitzt und
d) die Lösung aus Verfahrensschritt c) wird in einer Ausfäll-Lösung zu Polyazol-Kompositen ausgefällt und insbesondere neutralisiert.

2. Verfahren nach Anspruch 1, **dadurch gekennzeichnet, dass** die Mischung aus dem Kondensationsmittel und dem wenigstens einen Füllstoff vor oder nach Erwärmen der Mischung mit Ultraschall beaufschlagt und/oder gerührt wird.

3. Verfahren nach Anspruch 1 oder 2, **dadurch gekennzeichnet, dass** die Zugabe von Hydrazin und/oder dessen Derivaten vor der Zugabe von Dicarbonsäure und/oder deren Derivaten erfolgt, wobei insbesondere während der und/oder nach der Zugabe von Hydrazin und/oder dessen Derivaten in die Mischung die Mischung, vorzugsweise in einer inerten Atmosphäre, gerührt wird und/oder dass während oder nach der Zugabe von Dicarbonsäure und/oder deren Derivaten in die Mischung die Lösung gerührt wird.

4. Verfahren nach einem der Ansprüche 1 bis 3, **dadurch gekennzeichnet, dass** die Lösung im Verfahrensschritt c) während und/oder nach dem Erwärmen gerührt wird.

5. Verfahren nach einem der Ansprüche 1 bis 4, **dadurch gekennzeichnet, dass** die Erwärmung der Mischung im Verfahrensschritt a) bei einer Temperatur von 25°C bis 300°C, insbesondere zwischen 50°C und 200°C, weiter vorzugsweise zwischen 60°C und 120°C, durchgeführt wird und/oder dass die Erhitzung der Lösung im Verfahrensschritt c) bei einer Temperatur von 25°C bis 300°C, insbesondere zwischen 50°C und 200°C, weiter vorzugsweise zwischen 90°C und 170°C, durchgeführt wird.

6. Verfahren nach einem der Ansprüche 1 bis 5, **dadurch gekennzeichnet, dass** die Erwärmung der Mischung im Verfahrensschritt a) für eine Zeitdauer von 1 Minute bis 100 Stunden, insbesondere für eine Zeitdauer von 0,5 Stunden bis 48 Stunden, weiter vorzugsweise für eine Zeitdauer von 0,5 Stunden bis 24 Stunden, ausgeführt wird und/oder dass die Erhitzung der Lösung im Verfahrensschritt c) für eine Zeitdauer von bis zu 48 Stunden, vorzugsweise von 0,5 Stunden bis 48 Stunden, insbesondere von 1 Stunde bis 24 Stunden oder von 1 Stunde bis 16 Stunden, ausgeführt wird.

7. Verfahren nach einem der Ansprüche 1 bis 6, **dadurch gekennzeichnet, dass** im Verfahrensschritt b) Hydrazin in Form von Hydrazin-Salz, insbesondere Hydrazin-Sulfatsalz, zugemischt wird und/oder dass im Verfahrensschritt b) Dicarbonsäure in Form von Dicarbonsäure und/oder deren Derivate und/oder eine Mischung davon mit einem Diamin zugemischt werden, wobei insbesondere die Dicarbonsäure und/oder deren Derivate eine Struktur gemäß der Formel 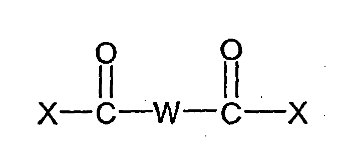 aufweisen, wobei W eine Gruppe mit 1 bis 40 Kohlenstoffatomen ist, X eine Gruppe mit der Formel OR² beschreibt, wobei R² ein Wasserstoffatom oder eine Gruppe mit 1 bis 20 Kohlenstoffatomen ist, und weitere, insbesondere W, einen Substituenten und/oder ein Mehrfachringsystem mit aromatischen Ringen umfasst, wobei insbesondere ein oder mehrere Gruppen von - O -, - CO -, - C(CH₃)₂ -, - C(CF₃)₂ - und - SO₂ - zwischen den aromatischen Ringen vorhanden sind,
und/oder wobei insbesondere das oder die Diamine eine Struktur gemäß der Formel
H₂N-Q-NH₂
aufweisen, wobei Q eine Gruppe mit 1 bis 40 Kohlenstoffatomen ist.

8. Verfahren nach einem der Ansprüche 1 bis 7, **dadurch gekennzeichnet, dass** der Füllstoff aus, insbesondere modifiziertem oder nicht modifiziertem, Ruß (CB) und/oder Kohlenstoff-Nanofasern und/oder Kohlenstoff-Nanoröhrchen und/oder Fulleren und/oder amorphem Kohlenstoff und/oder Zeolith und/oder Graphen und/oder Molekularsieb-Kohlenstoff und/oder Graphit und/oder pyrolysierten Polymerpartikeln und/oder Aluminiumoxid und/oder Zinkoxid und/oder Siliziumdioxid und/oder Silikaten und/oder Polymerfasern und/oder Glasfasern und/oder Calciumcarbonatpulvern und/oder Bariumsulfat und/oder Kaolin und/oder Titandioxid und/oder Eisenoxid und/oder organischen Harzen und/oder natürlichen mineralischen Füllstoffen und/oder synthetischen mineralischen Füllstoffen und/oder Tonen und/oder Aluminiumsilikat und/oder Hektorit und/oder Montmorillonit und/oder Bentonit und/oder Beidelit und/oder Saponit und/oder Stevensit und/oder Sauconit und/oder Nontronit und/oder Gold und/oder wasserhaltigen Metallhydroxiden und/oder Smektiten und/oder Vermiculiten und/oder Glimmer und/oder Aluminiumoxid und/oder Aluminiumnitrid und/oder Buckminster-Fullerenen und/oder Kupfer und/oder Kupferoxid und/oder Ion und/oder Eisen-Kobalt-Legierung und/oder Eisen-Nickel-Legierung und/oder Magnesium und/oder Magnesiumoxid und/oder magnetischen Nanopartikeln und/oder magnetischen Nanostrukturen und/oder Magnetit und/oder Nanodots und/oder Nanobelts und/oder Nanokristallen und/oder pulverförmigen Nanoschmiermitteln und/oder Nanostäbchen und/oder Nanoschleifschwämmen und/oder Nickelnioboxid und/oder Quantenpunkte und/oder Silber und/oder Titandioxid und/oder Titan und/oder Wolfram und/oder Vanadiumoxid und/oder Zink und/oder Zirconium und/oder Zirconiumoxid und/oder Zirconiumsilikat und/oder Mischungen davon besteht.

9. Verfahren nach einem der Ansprüche 1 bis 8, **dadurch gekennzeichnet, dass** die Konzentration des Füllstoffs in den Polyazol-Kompositen zwischen 0,0001 Gew.-% und 50 Gew.-%, insbesondere zwischen 0,0001 Gew.-% und 30 Gew.-%, weiter vorzugsweise zwischen 0,001 Gew.-% und 15 Gew.-%, beträgt.

10. Verfahren nach einem der Ansprüche 1 bis 9, **dadurch gekennzeichnet, dass** die Mischung zusätzlich Verarbeitungshilfsmittel und/oder Vernetzungsmittel und/oder Weichmacher und/oder Treibmittel und/oder Schmiermittel und/oder grenzflächenaktive Stoffe und/oder Konsistenzverbesserer und/oder Farbstoffe und/oder Pigmente und/oder Glimmer und/oder Flammverzögerungsmaterial und/oder Stabilisatoren und/oder Haftvermittler und/oder Mischungen davon enthält.

11. Verfahren nach einem der Ansprüche 1 bis 10, **dadurch gekennzeichnet, dass** das Polyazol ein Polymer mit wenigstens einem konjugierten Ring mit zwei Stickstoffatomen und einem Sauerstoffatom aufweist, wobei insbesondere das Polymer eine Wiederholungseinheit der Struktur 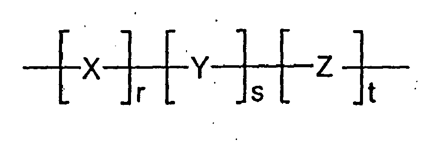 und/oder 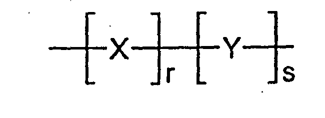 und/oder 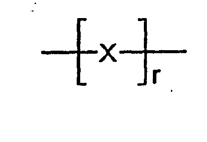 aufweist, wobei r, s und t ganze Zahlen sind, X und Y und Z jeweils unabhängig eine Gruppe sind, die eine der nachfolgend beschriebenen Strukturen aufweisen: 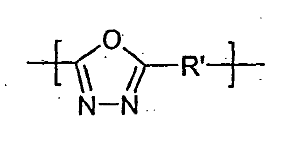 und/oder 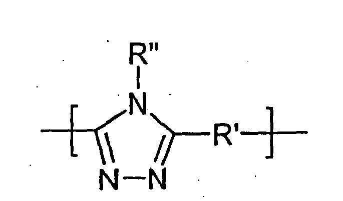 und/oder 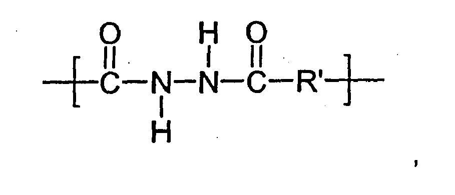 wobei R und R' jeweils Gruppen mit 1 bis 40 Kohlenstoffatomen sind und R" ein Wasseratom oder eine Gruppe mit 1 bis 40 Kohlenstoffatomen ist.

12. Verfahren nach einem der Ansprüche 1 bis 11, **dadurch gekennzeichnet, dass** die Polyazol-Kompositen eine relative Molekülmasse zwischen 10² g/mol und 10⁷ g/mol, insbesondere zwischen 10³ g/mol und 10⁶ g/mol, weiter vorzugsweise zwischen 10⁴ g/mol und 10⁵ g/mol aufweisen.

13. Verfahren nach einem der Ansprüche 1 bis 12, **dadurch gekennzeichnet, dass** die Polyazol-Kompositen in einer Lösung gelöst werden und unter Verwendung eines Kalanders, vorzugsweise mit drei Rollen, und/oder eines Mischers, insbesondere eines Ultraschallmischers, vor dem Gießen zu einem Film oder Bilden einer Faser bearbeitet werden und/oder dass die Polyazol-Kompositen vor dem Gießen zu einem Film oder Bilden einer Faser geschmolzen werden.

14. Polyazol-Komposite, wobei die Polyazol-Komposite wenigstens einen Füllstoff enthält, der durch Polyazol funktionalisiert ist, insbesondere erhältlich durch Ausführung der Verfahrensschritte gemäß den Ansprüchen 1 bis 13.

15. Verwendung von Polyazol-Kompositen nach Anspruch 14 zur Herstellung einer Membran oder einer Faser oder eines Films oder einer Folie oder einer Beschichtung oder eines Formteils oder in Brandschutzstrukturen oder als Flammverzögerungsmaterial oder als leitfähiger Draht oder als Drahtschutzhülle oder als Antistatikmaterial oder als Konstruktionsbauteil für den Kraftfahrzeugbereich oder für Bauteile für die Luftfahrt oder in Textilien, insbesondere Bekleidungstextilien, oder als Verstärkungsmaterial.
